# EUROPEAN PATENT SPECIFICATION

(11) **EP 1 829 179 B1**
(45) Date of publication and mention of the grant of the patent: **25.03.2009**
(21) Application number: 05818539.8
(22) Date of filing: 12.12.2005
(51) Int. Cl.: H02G 3/06

(54) **FITTING FOR JOINING CABLE TRUNKING UNITS**
PASSTEIL ZUM VERBINDEN VON KABELBAUMEINHEITEN
RACCORD DESTINE A JOINDRE DES UNITES D'ACHEMINEMENT DE CABLES

(30) Priority: 13.12.2004 GB 0427170; 25.05.2005 GB 0510698
(43) Date of publication of application: 05.09.2007
(73) Proprietor: Novar ED&S Ltd, St. Asaph Denbighshire North Wales LL17 0ER (GB)
(72) Inventor: DOHERTY, Tom, Ellesmere Port Cheshire CH66 2GD (GB); ALLEN, George, Mark, Nant Bwlch Yr Haiarn Trefriw LL27 OJB (GB); HARRISON, John, Robert, St Helens Merseyside WA10 6HB (GB); RICHARDSON, Daniel, Llandudno Conway LL30 2QF (GB)
(74) Representative: Bardo, Julian Eason
(86) International application number: PCT/GB2005/004785
(87) International publication number: WO 2006/064206

(56) References cited:
- EP-A- 1 309 057
- US-A- 5 917 982

## Description

### FIELD OF THE INVENTION

The present invention relates to cable trunking systems for use in buildings that distribute services around a room in a building. Specifically, the present invention relates to a fitting for joining lengths of cable trunking. In particular, although not exclusively, the present invention provides a tee-piece for providing a junction between three trunking units.

### BACKGROUND OF THE INVENTION

Cable trunking systems may be used to distribute different types of cables, such as power cables and data cables, around a room and to provide access points such as electrical sockets, telephone/data points and the like.
Thus, the cable trunking system provides a flexible way of positioning electrical sockets and telephone/data points where desired around a room.

Cable trunking systems generally comprise extruded lengths of trunking that are traditionally wall mounted at dado rail level. Such lengths generally have a base, sidewalls and a cover that fit together to form a sealed enclosure. Often, the base has one or two longitudinal dividing walls projecting therefrom to abut against the cover such that, when the cover is fitted to the base, two or three separated compartments are formed through which cables may be routed. The compartments allow the segregation of different types of cables, for example power cables from data cables.

A common configuration is to have two longitudinal dividing walls that divide the trunking into three - compartments. One type of cable is usually contained in the upper compartment, and the other type of cable is contained in the lower compartment. The middle compartment is used to mount access points to the cables, e.g. power sockets and telephone points. The appropriate type of cable is routed through to the middle compartment at the access point via holes formed in the dividing walls.

In use, an installer mounts the base to a wall, or other suitable mounting surface, and then places power cables along one open compartment and data cables along another compartment, add access points where required, and then complete the installation by fitting the cover.

In this way, a room such as an office, may be provided with power points, telephone points and aerial sockets for all manner of electrical applications such as televisions, computers, telephones, etc. Often, the trunking connects with either a ceiling void or a floor void that provides the routing of services throughout the entire building. Hence, a junction must be formed between vertical and horizontal trunking.

Such junctions are usually formed using dedicated fittings such as a tee piece. The fittings are arranged to receive a cut end of each length of trunking to be joined. The fitting overlaps the adjacent lengths of trunking to ensure that there are no gaps in the trunking as a whole. Use of such a fitting enables an aesthetically pleasing installation, and generally ensures integrity of the insulation and protection provided by the trunking. Where the trunking is being used for carrying both data and power cables, the separation of the compartments carrying each type of these cables must be preserved. This is a particular problem in a tee piece where the data cables may need to cross the power cables.

A further problem to be overcome at junctions is that the cables must turn corners. Where the trunking is being used for carrying data cables such as optical fibres, it is essential that the trunking is arranged so that such cables cannot bend less than a particular minimum bend radius in order to avoid damage to the cables and degradation of the signal.

US Patent No. 5,917,982 describes a tee fitting for joining trunking divided into two equal compartments by a central dividing wall. The junction is formed where a horizontal section of trunking is joined to a vertical section of trunking that extends to the ceiling. The tee fitting has external walls to define the general T-shape of the junction, although the corners have a rounded profile to ensure cables follow at least the minimum required bend radius. A bridge piece is attached to the base of the tee fitting to define: (a) an overpass connection that links an uninterrupted section of the lower compartment of the horizontal section of trunking to one of the compartments of the vertical section of trunking; and (b) an underpass connection that allows the upper compartment of the horizontal section of trunking to continue uninterrupted beneath the bridge piece and that also connects with the other compartment of the vertical section of trunking. The bridge part may be positioned in one of two laterally offset positions. The first position sees the overpass align with the left compartment of the vertical trunking, and the second position sees the overpass align with the right compartment.

### SUMMARY OF THE INVENTION

Against this background, and from a first aspect, the present invention resides in a cable trunking assembly fitting for joining an end of a first length of trunking to an end of a second length of trunking, the first length of trunking having a first compartment for carrying cables and the second length of trunking having an internal volume longitudinally partitioned into second and third compartments for carrying cables, the fitting comprising: first, second and third end apertures for interfacing with the first, second and third compartments respectively of the adjacent lengths of trunking; and first, second and third passages extending from the first, second and third end apertures respectively to meet at a central void; characterised in that the assembly fitting further comprises guide means adapted to be located at least partially in the void in first and second positions to define a conduit linking two passages, movement between the first and second positions requiring a rotation of the guide means; wherein, in the first position, the conduit links the first passage to the second passage and, in the second position, the conduit links the first passage to the third passage.

Hence, a fitting is provided that allows selectable routing of cable from a compartment ("first") of one length of trunking to either of a pair of compartments ("second" and "third") of a second length of trunking. As opposed to the prior art, the two positions are related by a rotation rather than a translation. The guide means may require more than a mere rotation to effect a change of position. For example, walls may overlap such that they prevent mere rotation of the guide means. Instead, the guide means may need to be lifted from the fitting before being rotated and dropped back into the fitting.

Clearly, the void is an empty part of the fitting when the fitting is in a disassembled form: putting the guide means in place will of course lead to the void being at least partially filled with the guide means. Moreover, advantageously the guide means may comprise members that serve to partition some of the passages from the void, such that only a select few passages are in communication with the void and hence other passages.

Optionally, in the first position, the guide means forms a barrier separating the first passage from the third passage and, in the second position, the guide means forms a barrier separating the first passage from the second passage. The guide means may maintain a partition between the second and third compartments (of the second length of trunking) in both the first and second positions. Advantageously, the partition is substantially continuous between the end of the first end aperture and the second end aperture. In this way, different types of cables may remain segregated as they pass through the fitting.

In its broadest sense, the present invention may be used to join a first length of trunking having a single cable-carrying compartment (the "first") to a second length of trunking having two cable-carrying compartments (the "second" and "third"). However, the present invention enjoys flexibility in that it may be applied to many other junctions of trunking, in terms of the number of sections of trunking, the number of compartments within any piece of trunking and the orientation of the lengths of trunking relative to each other.

For example, the first length of trunking may have an internal volume that is longitudinally partitioned to form the first compartment and also a fourth compartment (i.e. the first length of trunking comprises first and fourth compartments, the second length of trunking comprises second and third compartments). The fitting may then further comprise a fourth end aperture for interfacing with the fourth compartment and a fourth passage extending from the fourth end aperture to join the central void. The guide means may then further comprise an arch portion defining an overpass and an underpass, the overpass comprising the conduit descried above and the underpass comprising an underpass conduit. In the first position, the underpass conduit links the fourth passage to the third passage and, in the second position, the underpass conduit links the fourth passage to the second passage. In this way, a fitting is provide to link two lengths of trunking having two cable-carrying compartments to each other with the flexibility to choose which compartment is connected to which compartment, while still preserving separation of the cable routes through the fitting.

As a further example, the fitting may further join an end of a third length of trunking having an internal volume longitudinally partitioned into fifth and sixth compartments for carrying cables to the other two lengths of trunking. I this arrangement, the first length of trunking has first and fourth compartments, the second length of trunking has second and third compartments, and the third length of trunking has fifth and sixth compartments). The fitting may comprise fifth and sixth end apertures for interfacing with the fifth and sixth compartments respectively; and fifth and sixth passages extending from the fifth and sixth end apertures respectively to join the central void. The guide means may be arranged such that, in the first position, the overpass conduit links the fifth passage to the second passage and the underpass conduit separately links the sixth passage to the third passage. In the second position, the overpass conduit links the fifth passage to the third passage and the underpass conduit separately links the sixth passage to the second passage. Thus a junction is formed where two compartments of two lengths of trunking may be joined to either compartment of the third length of trunking, the other two compartments of the two lengths of trunking being joined to the other compartment of the third length of trunking.

Optionally, the fitting comprises three side walls that define sides between the three ends of the fitting and three internal walls, an internal wall extending from each of the three ends, the side walls and internal walls defining the first to sixth passages and the void. The side walls and the internal walls may have smoothly curving sections where they change direction. The side walls connecting ends of the fitting at an angle to each other may be smoothly curving between the ends. This curvature helps guide cables through the fitting without kinking or forming bends of too tight a radius. For example, the internal walls may smoothly curve towards the void where the guide means is received, thereby being arranged to guide smoothly cables to the overpass conduit and/or underpass conduit.

Optionally, the fitting may have substantially U-shaped internal walls to divide each end into three passages. This allows interfacing with trunking having two dividing walls that separate the trunking into three compartments. The U-shaped walls effectively seal the middle compartments as they form blind passages which, generally, is not a problem because cables are routed through only the outer compartments.

According to a first preferred embodiment, the guide means comprises two side walls that define a tapering overpass conduit with a wide open end and a narrow open end, the wide open end being sized to fit between two of the U-shaped internal walls and the narrow open end having a width corresponding to a common width of the outer passages. This sizing allows the side walls of the guide means to abut against the side walls and internal walls of the fitting thereby forming partitions. In this embodiment, the guide means may be rotated so that the narrow open end is received in either of the outer passages. In a contemplated embodiment, one of the sidewalls adjacent the wide open end overlaps a correspondingly shaped portion of one of the adjacent U-shaped internal wall and the other of the sidewalls adjacent the wide open end extends from the adjacent U-shaped internal wall.

In an alternative arrangement according to a second preferred embodiment, two of the internal walls are substantially U-shaped to divide two ends into three passages and the guide means is substantially Y-shaped, having sidewalls that define a single opening in one end that is sized to correspond to a common width of the centre compartment of each end of the fitting, and that define a pair of openings at the other end sized to correspond to a common width of the outer compartments of each end and being disposed to be received in a pair of such outer openings.

The pair of openings may be separated by a U-shaped sidewall that corresponds to one of the internal walls. Optionally, the guide means comprises a smoothly curving ramp surface that links the three openings. This allows cables to be passed smoothly over the overpass conduit. The guide means may be rotated through 180° between the first and second positions, such that in the first position, the single opening opens to the first and fifth passages, and the pair of openings are received in the second and third passages such that the overpass conduit connects the first and fifth passages to the second and third passages, and wherein the underpass conduit links the fourth and sixth passages to the centre passage between the second and third passages via an aperture provided in the U-shaped wall separating the pair of openings.

Optionally, curved surfaces are provided on the guide means for guiding cables through the aperture in the U-shaped wall separating the pair of openings.

In order to form partitions to separate passages, the void may be provided with a low wall extending between two of the U-shaped internal walls to divide partially the first and fifth passages from the fourth and sixth passages, the low wall extending to meet the underside of the arch portion of the guide means when attached to the base part. Optionally, the guide means has hinged portions that extend from sidewalls of the guide means to meet two of the U-shaped internal walls and to abut the top of the low wall. In the second position, the pair of openings may open to the first and fifth passages, and the single opening may extend into the end of the fitting comprising the second and third compartments such that the sidewalls defining the single opening form internal walls that define the second and third compartments, such that the overpass conduit connects the first and fifth passage to the centre passage between the second and third passages, and the underpass conduit links the fourth and sixth passages to the second and third passages.

From a second aspect, the present invention resides in a cable trunking assembly comprising first and second lengths of trunking and any of the fittings described above used to join the first and second lengths of trunking. The first length of trunking comprises a first compartment for carrying cables that terminates at an end adjoining the fitting at a first orifice. The second length of trunking comprises an internal volume longitudinally partitioned into second and third compartments for carrying cables, the second and third compartments terminating at an end adjoining the fitting at second and third orifices. The first, second and third end apertures of the fitting adjoin the first, second and third orifices respectively of the first and second lengths of trunking such that the first, second and third compartments are continuous with the first, second and third passages.

Other preferred but optional features of the present invention are defined in the appended claims.

### BRIER DESCRIPTION OF THE DRAWINGS

Specific embodiments of the invention will now be described, by way of example, with reference to the accompanying drawings, in which:
Figure 1 is a perspective view of a trunking assembly, with covers removed that includes two tee fittings according to a first embodiment of the invention;
Figure 2 is a plan view of a trunking assembly akin to that of Figure 1, shown without a cover and showing one possible cable routing arrangement;
Figure 3 is a perspective exploded view of the tee fittings of Figures 1 and 2;
Figure 4 is a perspective view from below the bridge part of the tee fitting of Figure 3;
Figure 5 is a perspective view from the side of the bridge part of the tee fitting of Figure 3;
Figure 6 is a plan view of a second embodiment of a trunking system according to the present invention, shown without a cover;
Figure 7 is a plan view of a third embodiment of a trunking system according to the present invention shown without a cover;
Figure 8 is a perspective view of an assembled tee fitting according to a fourth embodiment of the present invention;
Figure 9 is an exploded view in perspective of the tee fitting of Figure 8;
Figure 10 is a perspective view of the base part and bridge part of the tee fitting of Figure 8 assembled in a first orientation;
Figure 11 is a perspective view of the base part and bridge part of the tee fitting of Figure 8 assembled in a second orientation;
Figure 12 is a plan view corresponding to the perspective view of Figure 10;
Figure 13 is a plan view corresponding to the perspective view of Figure 11;
Figure 14 is a perspective view of the bridge part from above; and
Figure 15 is a perspective view of the bridge part from below.

### DETAILED DESCRIPTION OF PREFERRED EMBODIMENTS

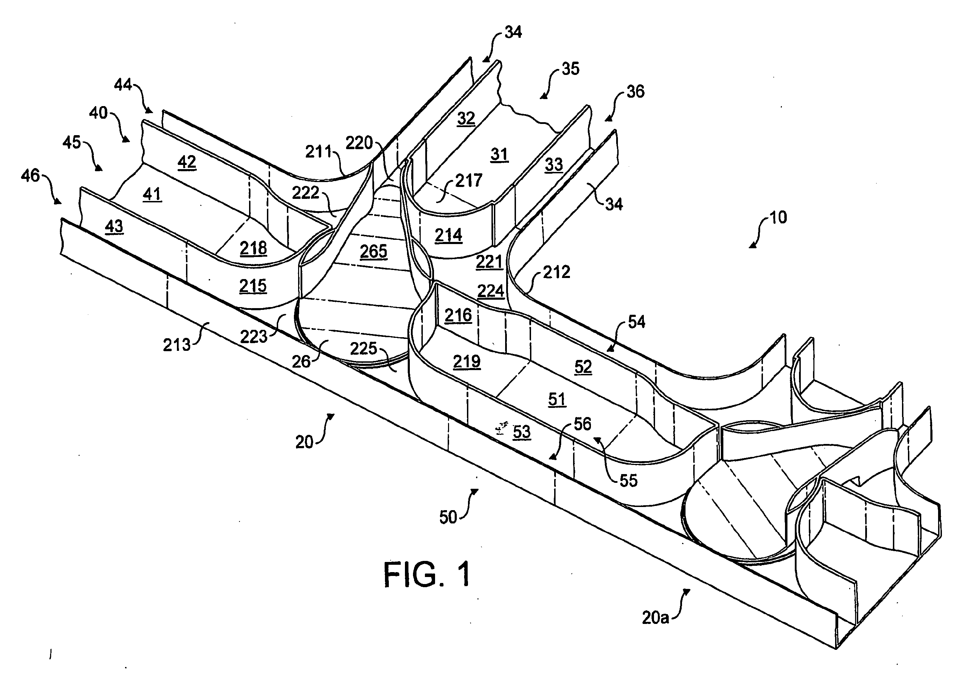

The trunking assembly 10 of Figures 1 to 4 includes one or more tee fitting 20 used to join sections of straight trunking 30, 40, 50. Figure 1 shows three such straight sections of trunking, upper trunking 30, left trunking 40 and right trunking 50 that the tee fitting 20 is used to join. Each section of trunking 30, 40 and 50 comprises a base part 31, 41, 51 and a cover (not shown) that fit together to form a sealed enclosure. Each base part 31, 41, 51 has a pair of longitudinal dividing walls 32, 33, 42, 43, 52, 53 that separate the trunking into three compartments 34, 35, 36, and 44, 45, 46, and 54, 55, 56. The outer compartments 34, 36, 44, 46, 54, 56 are relatively narrow while the middle compartments 35, 45, 55 are relatively wide.

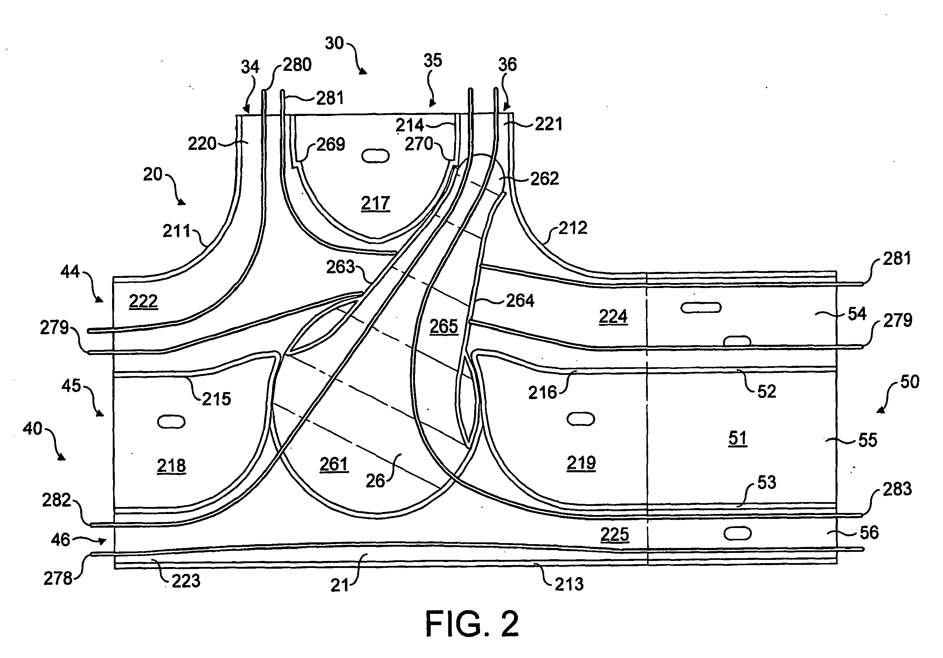

The trunking assembly 10 of Figure 2 differs slightly from that of Figure 1 in that left trunking 40 and 50 has unequally-sized compartments 54 and 56, with upper compartment 54 being wider than lower compartment 56. Similarly, right trunking 40 has an upper compartment 44 that is larger than lower compartment 46. Thus, compartments 217, 218, 219 are correspondingly sized. Upper trunking 30 is the same in Figures 1 and 2, such that compartments 34 and 36 are of equal size.

In use, an installer will use, say compartments 34, 44, 54 for data cables, and 36,46 and 56 for power cables so that the cables are segregated within the trunking assembly. The third compartments 35, 45, 55 may be used to receive electrical wiring accessories as required along each length of trunking, such as power sockets and telephone points. A possible wiring arrangement is shown in Figure 2.

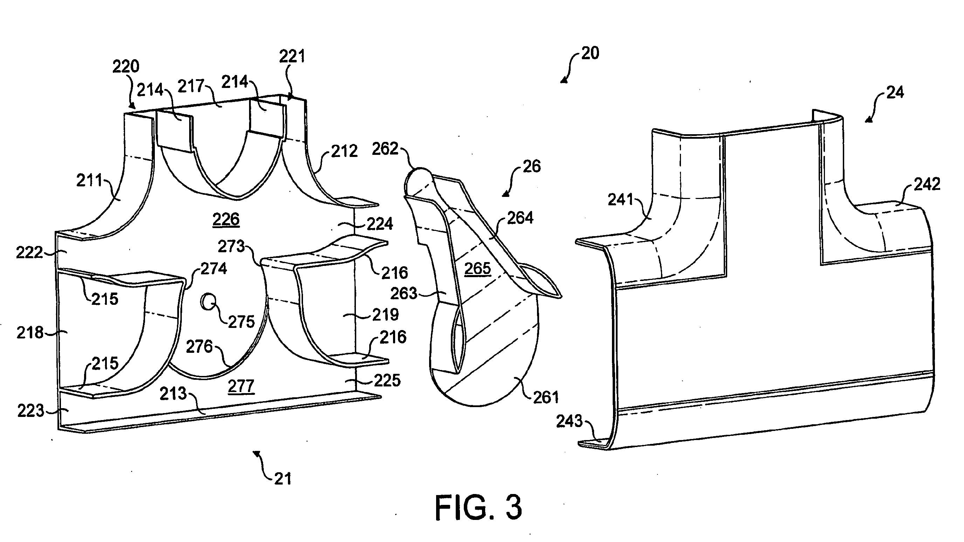

Figure 3 is an exploded view of a tee fitting 20 used to join the lengths of trunking 30, 40 and 50. The tee fitting 20 comprises a base part 21, a cover 24 and a bridge part 26. The base part 21 and cover 24 are both T-shaped, having three arms. The base part 21 and cover 24 both have sidewalls that overlap to form a sealed enclosure when the tee fitting 20 is assembled, the bridge part 26 being retained within this enclosure. The cover 24 may attach securely to the base part 21 using any number of standard fastenings.

The base part 21 of the tee fitting 20 has side walls 211, 212, and 213 that define the three arms of the tee shape. These side walls 211, 212, 213 abut side walls of adjacent trunking to form continuous surfaces. Sidewalls 211 and 212 are curved to define a minimum bend radius for cables passing therethrough.

The tee fitting 20 has internal dividing walls 214, 215 and 216. The dividing walls 214, 215, 216 are generally U-shaped and are distributed so that there is one in each of the three arms of the tee fitting 20. The ends of the dividing walls 214, 215 and 216 extend to the edges of the arms to meet the longitudinal dividing walls 32, 33, 42, 43, 52, 53 of the adjacent trunking 30, 40, 50. Hence, the U-shaped dividing walls 214, 215, 216 define termini to the middle compartments 217, 218, 219. The dividing walls 214, 215 and 216 also partially define a pair of outer compartments 220, 221, 222, 223, 224, 225 to each arm that interconnect in the centre of the tee fitting 20 to form a central void 226.

When assembled, the bridge part 26 is located largely in this void 226, with a wide open end 261 communicating with the lower compartments 223, 225 and a narrow open end 262 communicating with left vertical compartment 220. Sidewalls 263 and 264 of the bridge part 26 separate the conduit formed by the bridge part 26 from the upper compartments 222, 224. The bridge part 26 has a general arching shape that provides an overpass with a ramp surface 106 that extends to link the wide open end 261 with the narrow open end 262. The underside of the arch section 266 provides an underpass that links upper compartments 222, 224.

The side walls 263 and 264 terminate at the narrow end 262 with concave external wall surfaces 267, 268. Concave surfaces 267 and 268 abut against correspondingly-shaped parts of the side walls 211, 212 and dividing wall 214, to form continuous surfaces to separate compartments appropriately. The side walls 263, 264 terminate at the wide end 261 with a convex external wall surfaces 271, 272 arranged to abut against correspondingly-shaped surfaces 274, 273 of the dividing walls 215, 216 respectively, so as to provide substantially continuous surfaces. The substantially continuous surfaces are such that any gaps in the surface are less than that allowed by the relevant British Standard or International Standard relating to separation of mains voltage and low voltage cables.

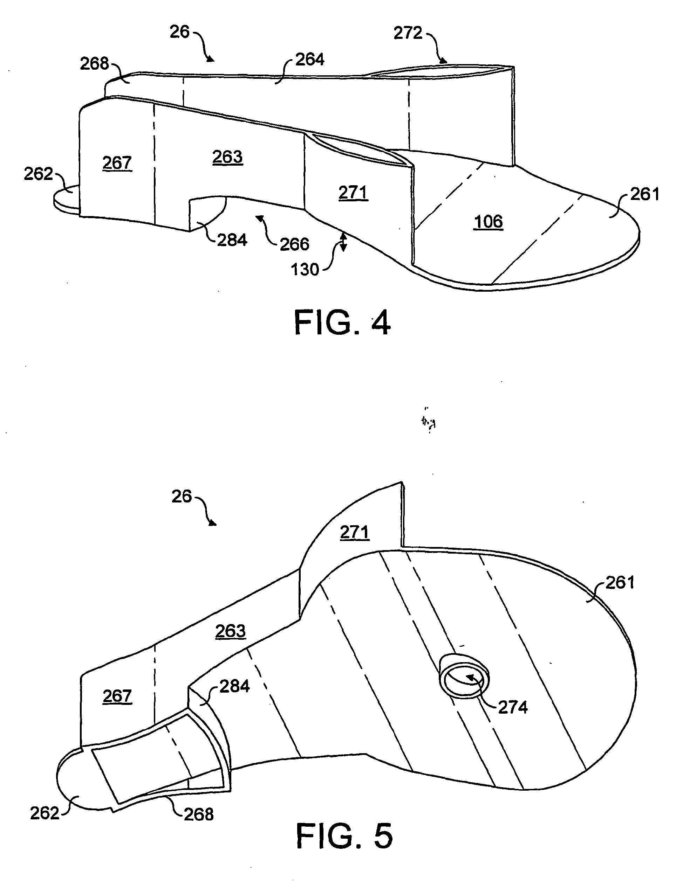

The bridge part 26 is rotatable to allow selection of either of the left or right vertical compartments 220, 221. The tee fitting 20 of Figure 1 show both arrangements. When assembled, one of the vertical compartments 220 or 221 is connected to the lower compartments 223 and 225 by the overpass formed by the ramp surface 106 best seen in Figure 5; the other of the compartments 31 or 33 is connected directly to one of the upper compartments 222 or 224, and indirectly to the other upper compartment 222 or 224 via the underpass beneath the arch portion 266. As can be inferred from Figures 1 and 2, the side walls 263, 264 and ramp surface 106 preserve separation of compartments in either orientation.

The bridge part 26 is arranged so that an installer may easily select which compartments to interconnect at the time of installation. Moreover, the installer need not have to carry fittings for each alternative configuration. An installer may easily locate the bridge part 26 as it is provided with a socket 274 that receives a spigot 275 provided in the void 226. The narrow open end 262 of the bridge part 26 may then only be received in either compartment 220 or 221. Spigot 275 and socket 274 are cylindrical to allow rotation between the two positions that allow connection to either compartment 220 or 221. A step provided in the base part 22 of the tee fitting 20 allows the wide open end 261 of the bridge part 26, and hence the ramp surface 106, to sit flush with an internal surface 277 of the base part 22. As the wide open end 261 is curved, the flush fit is preserved in both orientations.

Figure 2 shows cables 280, 136, 138, 279, 281 and 278 routed through the trunking assembly. Hence, Figure 2 is helpful in illustrating that the tee fitting 20 of Figures 1 to 4 are provided with many curved surfaces that ensure cables do not bend below a minimum bend radius as they pass through the tee fitting 20. Typical minimum bend radii may be specified as 25 mm or 50 mm.

Cables 279 and 278 run between left trunking 40 and right trunking 50. Cable 278 merely extends straight along the lower compartments 43 223, 225 and 53. Cable 279 extends along the upper compartments 41, 222, 224 and 51, and so must bend to negotiate underpass 266. To ensure the bending does not fall below the minimum radius allowed, dividing walls 271, 272 are shaped to guide the cable upwardly towards the underpass 266. In addition, side walls 264 of the bridge part 26 are also curved so that whichever sidewall projects into void 226, it provides a suitable curved surface for guiding cable 279.

Cables 280 and 281 run from the upper compartments 44, 54 of left and right trunking 40, 50 to the left compartment 34 of upper trunking 30. Cable 281 is routed through compartments 224 and 220 so that it merely follows sidewall 214 that is curved to preserve the minimum bend radius. Cable 280 extends through compartments 224 and 220 via underpass 266. As can be seen from Figures 3 and 3A, the narrow end 262 of the bridge part 26 is heel-like, having an upright wall 284. This upright wall 284 is curved so as to guide the cable 280 as it bends to enter compartment 220. U-shaped internal walk 214 also helps guide cable 280 as it enters compartment 220.

Cables 282 and 283 run from the lower compartments 43, 53 of left and right trunking 40, 50 to the right compartment 36 of upper trunking 30. Cable 282 is guided by U-shaped internal wall 215 as it bends to run across the ramp surface 106 provided by the bridge part 26. The curved side wall 263 of the bridge part 26 guide the cable 136 as it crosses the overpass, with curved ends 267 of the sidewalls 263 guiding the cable 282 as it bends to enter compartment 221. Similarly, U-shaped dividing wall 216 and side wall 264 guide cable 283 as it passes from compartment 225 to compartment 221.

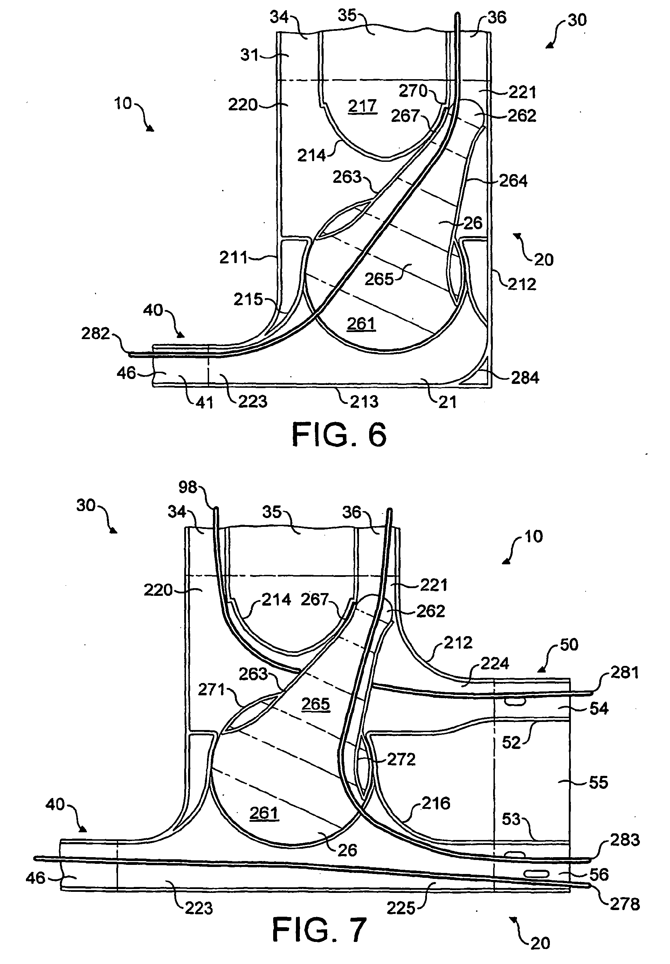

Figure 6 is a plan view of a second embodiment of a trunking system according to the invention, shown without the covers. The similarity between the trunking systems 10 of all the accompanying figures allows like reference numerals to be used for like parts. The fitting 20 of Figure 6 joins only a single length of horizontal trunking 40 to a length of vertical trunking 30, and so the fitting 20 has an L-shape. Trunking 30 corresponds to that of Figures 1 and 2 and so has three compartments 34, 35 and 36. Trunking 40 has only a single compartment 46. Bridge part 26 is the same as in Figures 1 to 4 and is provided to direct cables 282 routed along compartment 41 through the L-fitting 20, either to compartment 24 or to compartment 36. Figure 6 shows a connection to compartment 36, but it will be appreciated that a counter-clockwise rotation of the bridge part 26 will enable a connection to compartment 34.

In Figure 6, the bridge part's sidewall 263 closes off compartment 34, preventing access to or from compartment 41 to compartment 34 and providing a dividing wall as required. Cable 282 may pass through the L-fitting 20 from compartment 41 to compartment 36, with curved walls 215 and 267 preventing the cable 136 from being bent tighter than an acceptable minimum bend radius.

Figure 7 is a plan view of a third embodiment of a trunking system according to the invention without covers, shown with a tee fitting 20 connected to three lengths of trunking 30, 40 and 50. Trunking 30 has three compartments 34, 35 and 36, compartments 34 and 36 being of equal size. Trunking 40 has only a single compartment 41, akin to trunking 40 of Figure 6. Finally, trunking 50 has three unequally-sized compartments 54, 55 and 56. Bridge part 26 is provided to direct cables placed in compartments 41 and 56 over the tee fitting 20 either to compartment 34 or to compartment 36, depending on the orientation of the bridge part 26.

Figure 7 shows the bridge part 26 connected to compartment 56. The bridge part 26 has a sidewall 263 which prevents access to or from compartment 41 to compartment 34 when in this orientation. Cable 283 passes from compartment 53 to compartment 36 over the ramp surface 106 and is prevented by walls 216, 272,262 from being bent tighter than an acceptable minimum bend radius. In this arrangement, the underpass 102 allows cable 281 to run from compartment 54, under cable 138, to compartment 34. When cable 281 is pulled tight, curved walls 214 284 ensures that the cable 281 is not bent tighter than an acceptable minimum bend radius. Cable 278 is able to pass substantially straight from compartment 56 to compartment 46.

A further embodiment of the present invention will now be described that is distinctly different from the embodiments described above. Consequently, new referenced numerals will be adopted when describing this fourth embodiment, although it will be appreciated that some parts are similar to those already described. In particular, the tee fitting 500 of this fourth embodiment may be used to join lengths of trunking identical to those described above.

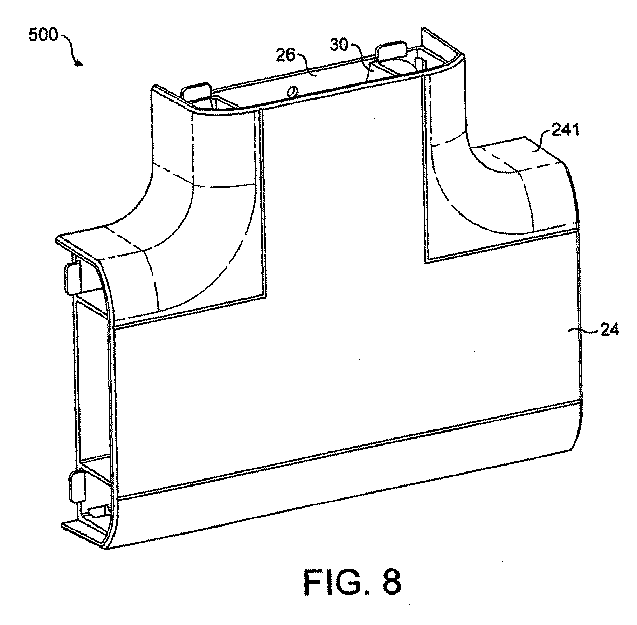

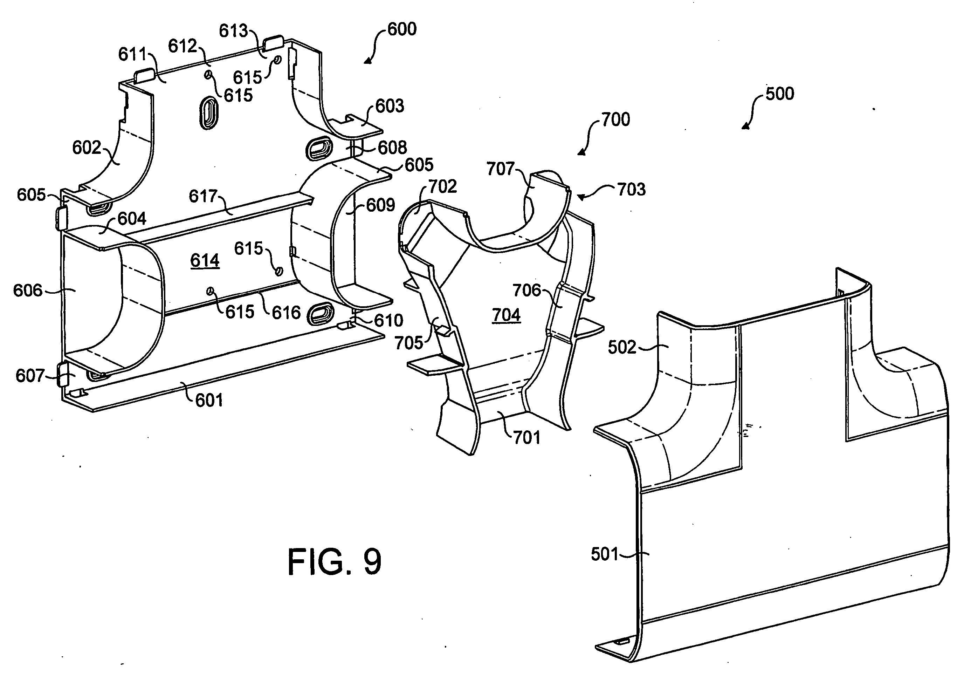

As can be seen from Figure 8, when assembled the tee fitting 500 has the same appearance as the tee fitting 20 previously described as they share a common cover 502 and 26. As will be more apparent from Figure 9, cover 502 attaches to a base part 600 in much the same way as previously described, with sidewalls 502 and 601 to 603 forming a sealed enclosure. In common with previous embodiments, a bridge part 700 resides in the sealed enclosure between the base part 600 and the cover 500. The enclosure is separated into respective compartments by dividing walls of the base part 600 and bridge part 700 that extend to abut against the cover 501 when the tee fitting 500 is assembled, as will be described in further detail below.

The tee fitting 500 is used to join three lengths of trunking identical to that of Figure 1, i.e. left, right and upper trunking, all being divided into three compartments by a pair of longitudinal dividing walls. Accordingly, the tee fitting 500 must abut the lengths of trunking and provide dividing walls that abut against the dividing walls of the adjacent trunking to ensure separation of compartments.

As can be seen from Figure 9, a pair of U-shaped dividing walls 604 and 605 are provided by the base part 600 that have ends positioned to abut against the two dividing walls of the adjacent trunking. Hence, U-shaped wall 604 defines an enclosed terminus to the middle compartments 606 and 609. U-shaped wall 604 defines an upper compartment 605 where it faces sidewall 602, and a lower compartment 607 where it faces sidewall 601. Likewise, U-shaped wall 604 defines an upper compartment 608 where it faces sidewall 603 and a lower compartment where it faces sidewall 601. It will be apparent that the compartments 611, 612 and 613 that will continue to the upper trunking are defined partially by the bridge part 700, and so they will be described later. The compartments 605 to 613 meet in the centre of the tee fitting 500 at a void 614.

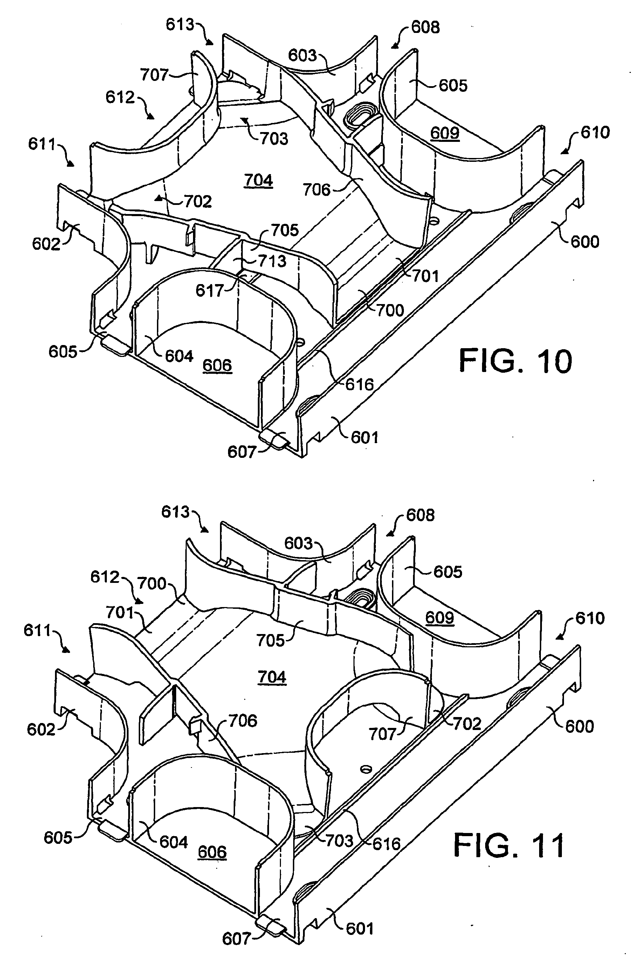

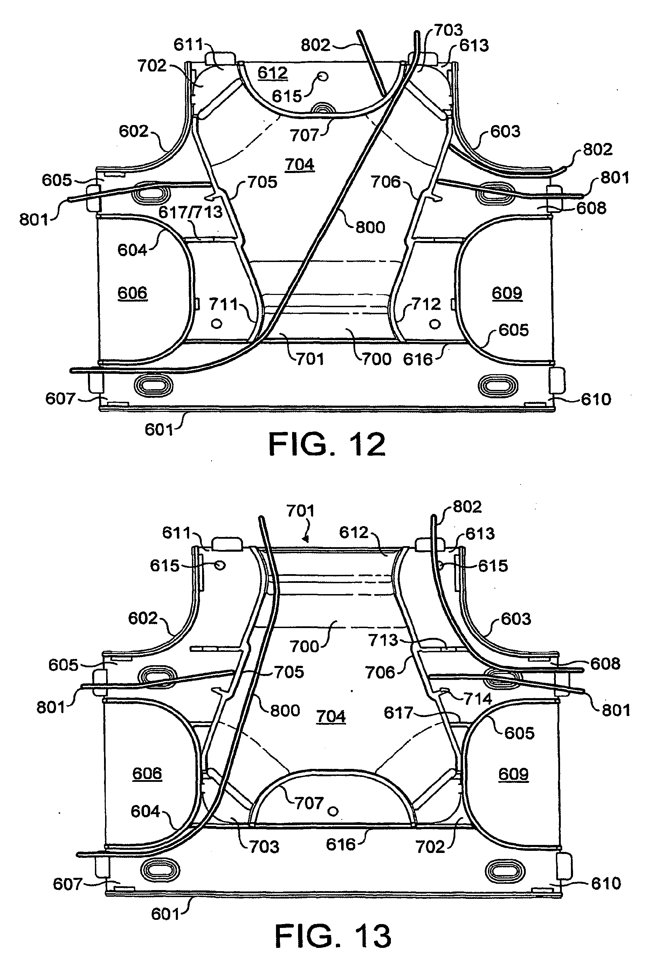

Figure 9 shows that the bridge part 700 is generally Y-shaped with a single opening 701 at one end and a pair of openings 702 and 703 at the other end. A ramp surface 704 extends from the single end 701 over the arched portion before dividing to end at the pair of openings 702 and 703. The bridge part 700 has sidewalls 705 and 706. A U-shaped wall 707 extends to link the pair of openings 702 and 703 where the ramp surface 704 divides. The ends of the U-shaped wall 707 terminate in precise lateral positions such that they abut the dividing walls of the adjacent upper trunking when the tee fitting 500 is assembled and installed. This arrangement ensures that the compartments or the upper trunking are preserved. Moreover, side walls 705 and 706 terminate at the single opening 701 at the same lateral positions, such that orientation of the bridge part 700 may be rotated through 180° and the side walls 705 and 706 will abut against the dividing walls of the adjacent upper trunking. Figures 10 and 11 show these two orientations in perspective, while Figures 1 and 13 show them in plan view.

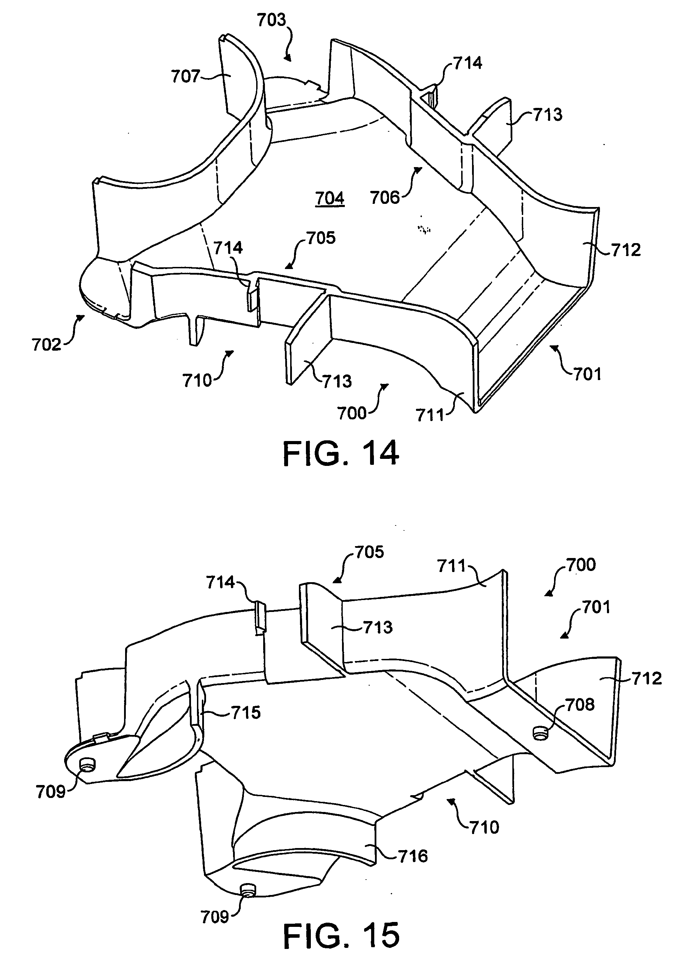

The bridge part 700 is located in the base part 600 as follows. As can be seen from Figure 9, the base part 600 is provided with six socket holes, all referenced by 615. These socket holes are sized and positioned to receive cooperating spigots 708, 709 provided on the underside of the bridge part 700, as best seen in Figure 15. A single spigot 708 is provided centrally under the single opening 701, while a pair of spigots 709 are provided at the other end, one under each of the pair of openings 702 and 703. A further locating feature is provided by a step 616 that extends across the void 614 parallel to the direction of the lower compartments 607 and 610. This step 616 provides an abutment that the end, either that of the single opening 701 or the pair of openings 702 and 703, will rest against when the bridge part is correctly installed.

In the orientation shown in Figures 10 and 12, the bridge part 700 provides an overpass that allows cables, such as cable 800, to run over the ramp surface 704 from lower compartments 607 and 610 to the left and right upper compartments 611 and 613. Both compartments 611 and 613 are accessible at the same time, in contrast with the earlier-described embodiments. In addition, the bridge part 700 provides an underpass 710 that allows cables, such as cable 801, to pass between both upper compartments 605 and 608. Furthermore, U-shaped wall 707 does not extend into the level of the underpass 710 such that upper compartments 605 and 608 are also linked to the middle compartment 612. This allows cables, such as cable 802, to extend from upper compartments 605 or 608 to middle compartment 612. Cables may then be routed through the middle compartment 612 into the adjacent middle compartment of the adjacent length of vertical trunking.

Although cables are not normally routed through the middle compartments of horizontal trunking, this is because the middle compartment is used to mount access points such as power sockets and telephone/data points. Access points are not normally located on vertical sections of trunking, so the present invention makes good use of the otherwise redundant middle compartment of a vertical section of trunking. Moreover, using the middle compartment of the vertical section increases the cable carrying capacity of the trunking system. For example many data cables, that are used to wire telephone/data points in a point-to-point configuration, may be routed through the middle compartment before splitting, some to go into the left section of trunking and some to go into the right section of trunking.

If, for whatever reason, the middle compartment is not available for cable routing (e.g. because of access points installed in the vertical section), cables may be diverted into one of the outer compartments. For example, in Figure 12, cable 802 may be routed into the left compartment of the upper length of trunking through a knockout in the dividing wall separating left and middle compartments (or though any other hole, either preformed or made in situ).

In the alternative orientation shown in Figures 11 and 13, the bridge part 700 provides an overpass that allows cables, such as cable 800, to run over the ramp surface 704 from lower compartments 607 and 610 to the middle compartment 612. As above; cable 800 may then be routed to a side compartment through a knockout or similar provided in the adjacent length of trunking. The underpass 710 again allows cables, such as cable 801, to pass between both upper compartments 605 and 608. Cables, such as cable 802, may be routed from upper compartments 605 or 608 to either left or right compartments 611 or 613.

As can be seen from the cable routing illustrated in Figures 12 and 13, several surfaces of the base part 600 and bridge part 700 are curved to ensure cables are not bent tighter than the minimum bend radius. For example, U-shaped walls 604 and 605 guide cables as they pass from lower compartments 607 and 610 respectively onto the ramp surface 704. In the orientation shown in Figure 12, curved ends 711 and 712 of the side walls 705 and 706 adjacent the single opening 701 also help guide cables smoothly, as does U-shaped wall 707. The side walls 602 and 603 of the base part 600 are also curved to guide cables from upper compartments 605 and 608 to left and right compartments 702 and 703. In the arrangement of Figure 12, a pair of curved walls 715 and 716, provided on the underside of the bridge part 700 under the pair of openings 702 and 703, also help guide cables such as cable 802.

Moreover, the upper compartments 605, 608 and lower compartments 607, 610 are always separated, no matter which orientation of the bridge part 700 is used.

In Figure 12, this is achieved by forming a barrier wall that extends across the void 614. The lower part of this wall (i.e. that at underpass level) is formed by a longitudinal wall 617 that extends from U-shaped wall 604 to U-shaped wall 605. The underside of the ramp surface 704 abuts against this wall 617 when the bridge part 700 is installed, thereby forming a barrier for the central section. A barrier must be formed to the height of the cover 501 to either side, and this is provided by hinged sections 713 provided on either side of the side walls 705 and 706. These hinge portions 713 are resilient such that they are inherently biased to open out and abut against the adjacent U-shaped walls 604 and 605, thereby completing the barrier.

Separation of upper compartments 605, 608 and lower compartments 607, 610 is achieved in Figure 13 by the longitudinal wall 617 abutting against the underside of the ramp surface 704 along virtually all its entire length. As can seen by comparing Figures 12 and 13, the width of the bridge part 700 is greater over the dividing wall 617 in the arrangement of Figure 13. The small sections of the dividing wall 617 visible to either side of the bridge part 700 in Figure 13 do not represent a breach in the separation of upper compartments 605, 608 and lower compartments 607, 610. This is because the curved walls 715 and 716 formed on the underside of the bridge part 700 extend such that they abut the dividing wall 617, thereby ensuring the desired separation.

The hinged sections 713 play no part in the separation of compartments in the arrangement of Figures 11 and 13. In fact, as can be seen from Figure 11, the hinged sections 713 actually restrict the data carrying capacity between compartments 605 and 611, and between compartments 608 and 613. To avoid this, the hinged sections may merely be cut from the bridge part 700. However, this would require the installer to carry a further tool and would take a relatively long time. Instead, it is preferred that the hinged sections 713 merely be pushed back to be flush against the side walls 705 and 706, as indicated by the arrow X of Figure 11: the hinged portions 713 are held in this position by catches 714, as shown in Figure 13.

As will be evident to the person skilled in the art, variations may be made to the embodiments described above without departing from the scope of the present invention defined by the appended claims.

For example, while tee fittings and L-shaped fittings have been described above, other shapes may be adopted. For example, Y shapes are also possible. In one form, the fitting may be a straight section, for example to join a section of single compartment trunking to a section of two or three compartment trunking (the bridge part allowing selection of the compartments to be connected while preserving separation from the other compartments). Moreover, the number of arms may be varied beyond two or three.

The present invention may be used with different types of trunking, e.g. single compartment trunking, double compartment trunking, triple compartment trunking and so on

The shape of the bridge part may be varied, as will be appreciated from the different forms it takes in Figure 14 as opposed to Figure 4. Essentially, the bridge part should provides an overpass and an underpass to allow cables to cross over each other whilst preserving their separation.

## Claims

1. A cable trunking assembly fitting (20) for joining an end of a first length of trunking (30) to an end of a second length of trunking (40), the first length of trunking (30) having a first compartment (36) for carrying cables and the second length of trunking (40) having an internal volume longitudinally partitioned into second and third compartments (44, 46) for carrying gables, the fitting (20) comprising:
first, second and third end apertures for interfacing with the first, second and third compartments (36, 44, 46) respectively of the adjacent lengths of trunking; and
first, second and third passages extending from the first, second and third end apertures respectively to meet at a central void (226); **characterised in that** the assembly fitting further comprises
guide means (26) adapted to be located at least partially in the void (226) in first and second positions to define a conduit linking two passages, movement between the first and second positions requiring a rotation of the guide means (26);
wherein, in the first position, the conduit links the first passage to the second passage and, in the second position, the conduit links the first passage to the third passage.

2. The fitting of claim 1 wherein, in the first position, the guide means (26) form a barrier separating the first passage from the third passage and, in the second position, the guide means (26) form a barrier separating the first passage from the second passage.

3. The fitting of claim 2, wherein the guide means (26) maintain a partition between the second compartment (44) and the third compartment (46) in both the first and second positions.

4. The fitting of claim 3, wherein the partition is substantially continuous between the second end aperture and the third end aperture.

5. The fitting of claim any of claims 1 to 4, wherein:
the first length of trunking has an internal volume longitudinally partitioned into the first compartment and a fourth compartment (34);
the fitting further comprising a fourth end aperture for interfacing with the fourth compartment (34) and a fourth passage extending from the fourth end aperture to join the central void (226);
the guide means (26) further comprising an arch portion (266) defining an overpass and an underpass, the overpass comprising the conduit and the underpass comprising an underpass conduit; and
wherein, in the first position, the underpass conduit links the fourth passage to the third passage and, in the second position, the underpass conduit links the fourth passage to the second passage.

6. The fitting of claim 5 for further joining an end of a third length of trunking (50) having an internal volume longitudinally partitioned into fifth and sixth compartments (54, 56) for carrying cables, the fitting further comprising:
fifth and sixth end apertures for interfacing with the fifth and sixth compartments (54, 56) respectively; and
fifth and sixth passages extending from the fifth and sixth end apertures respectively to join the central void (226);
wherein the guide means (26) is arranged such that, in the first position, the overpass conduit links the fifth passage to the second passage and the underpass conduit separately links the sixth passage to the third passage and, in the second position, the overpass conduit links the fifth passage to the third passage and the underpass conduit separately links the sixth passage to the second passage.

7. The fitting of claim 6, wherein the fitting comprises three side walls (211, 212, 213) that define sides between the three ends of the fitting and three internal walls (214, 215, 216), an internal wall extending from each of the three ends, the side walls and internal walls defining the first to sixth passages and the void (226).

8. The fitting of claim 7, wherein the side walls and the internal walls have smoothly curving sections where they change direction.

9. The fitting of claim 8, wherein side walls connecting ends of the fitting at an angle to each other are smoothly curving between the ends.

10. The fitting of claim 7 or claim 8, wherein the internal walls (214, 215, 216) smoothly curve towards the void where the guide means is received, thereby being arranged to guide smoothly cables to the overpass conduit and/or underpass conduit.

11. The fitting of any of claims 7 to 10, wherein the internal walls (214, 215, 216) are substantially U-shaped to divide each end into three passages.

12. The fitting of claim 11, wherein the guide means (26) comprises two side walls that define a tapering overpass conduit with a wide open end and a narrow open end, the wide open end being sized to fit between two of the U-shaped internal walls and the narrow open end having a width corresponding to a common width of the outer passages.

13. The fitting of claim 12, wherein the narrow open end is arranged to abut the walls defining the outer passages when it is received therein.

14. The fitting of claim 12 or claim 13, wherein one of the sidewalls adjacent the wide open end overlaps a correspondingly shaped portion of one of the adjacent U-shaped internal wall and the other of the sidewalls adjacent the wide open end extends from the adjacent U-shaped internal wall.

15. The fitting of any of claims 7 to 10, wherein two of the internal walls are substantially U-shaped to divide two ends into three passages.

16. The fitting of claim 15, wherein the guide means (26) is substantially Y-shaped, having sidewalls that define a single opening in one end that is sized to correspond to a common width of the centre compartment of each end of the fitting, and that define a pair of openings at the other end sized to correspond to a common width of the outer compartments of each end and being disposed to be received in a pair of such outer compartments.

17. The fitting of claim 16, wherein the pair of openings are separated by a U-shaped sidewall that corresponds to one of the internal walls.

18. The fitting of claim 16 or claim 17, wherein the guide means comprises a smoothly curving ramp surface that links the three openings.

19. The fitting of claim 17 or claim 18 wherein, in the first position, the single opening opens to the first and fifth passages, and the pair of openings are received in the second and third passages such that the overpass conduit connects the first and fifth passages to the second and third passages, and wherein the underpass conduit links the fourth and sixth passages to the centre passage between the second and third passages via an aperture provided in the U-shaped wall separating the pair of openings.

20. The fitting of claim 19, wherein curved surfaces are provided on the guide means (26) for guiding cables through the aperture in the U-shaped wall separating the pair of openings.

21. The fitting of any of claims 16 to 20, wherein the void (226) is provided with a low wall extending between two of the U-shaped internal walls to divide partially the first and fifth passages from the fourth and sixth passages, the low wall extending to meet the underside of the arch portion of the guide means when attached to the base part.

22. The fitting of claim 21, wherein the guide means (26) has hinged portions that extend from sidewalls of the guide means to meet two of the U-shaped internal walls and to abut the top of the low wall.

23. The fitting of claim 22, wherein the sidewalls are provided with fastening means for fastening the hinged portions to the side walls.

24. The fitting of any of claims 16 to 23 wherein, in the second position, the pair of openings open to the first and fifth passages, and the single opening extends into the end of the fitting comprising the second and third compartments such that the sidewalls defining the single opening form internal walls that define the second and third compartments, such that the overpass conduit connects the first and fifth passage to the centre passage between the second and third passages, and the underpass conduit links the fourth and sixth passages to the second and third passages.

25. A cable trunking assembly (10) comprising first and second lengths of trunking (30, 40) and the fitting (20) of any preceding claim that joins the first and second lengths of trunking, wherein:
the first length of trunking (30) comprises a first compartment (36) for carrying cables that terminates at an end adjoining the fitting at a first orifice;
the second length of trunking (40) comprises an internal volume longitudinally partitioned into second and third compartments (44, 46) for carrying cables, the second and third compartments terminating at an end adjoining the fitting at second and third orifices; and
the first, second and third end apertures of the fitting adjoin the first, second and third orifices respectively of the first and second lengths of trunking such that the first, second and third compartments are continuous with the first, second and third passages.

26. The cable trunking assembly (10) of claim 25, wherein the first length of trunking has an internal volume longitudinally partitioned into the first compartment (36) and a fourth compartment (34); the fitting further comprises a fourth end aperture for interfacing with the fourth orifice such that the fourth compartment (34) is continuous with a fourth passage extending from the fourth end aperture to join the central void; the guide means (26) further comprises an arch portion defining an overpass and an underpass, the overpass comprising the conduit and the underpass comprising an underpass conduit; and wherein, in the first position, the underpass conduit links the fourth passage to the third passage and, in the second position, the underpass conduit links the fourth passage to the second passage.

27. The cable trunking assembly of claim 26, further comprising a third length of trunking (50) joined to the first and second length of trunking by the fitting, the third length of trunking (50) having an internal volume longitudinally partitioned into fifth and sixth compartments for carrying cables, the fifth and sixth compartments (54, 56) terminating at an end adjoining the fitting at fifth and sixth orifices, the fitting further comprising:
fifth and sixth end apertures for interfacing with the fifth and sixth orifices respectively; and
fifth and sixth passages extending from the fifth and sixth end apertures respectively to be continuous with the fifth and sixth compartments and extending to join the central void;
wherein the guide means (26) is arranged such that, in the first position, the overpass conduit links the fifth passage to the second passage and the underpass conduit separately links the sixth passage to the third passage and, in the second position, the overpass conduit links the fifth passage to the third passage and the underpass conduit separately links the sixth passage to the second passage.

## Patentansprüche

1. Kabelkanalanordungspassteil (20) zum Verbinden eines Endes einer ersten Kanallänge (30) mit einem Ende einer zweiten Kanallänge (30), wobei die erste Kanallänge (30) eine erste Kammer (36) zur Aufnahme von Kabeln aufweist und die zweite Kanallänge (40) ein Innenvolumen aufweist, das in Längsrichtung in eine zweite und eine dritte Kammer (44, 46) zur Aufnahme von Kabeln unterteilt ist, wobei das Passteil (20) Folgendes umfasst:
eine erste, eine zweite und eine dritte Endöffnung zum Zusammenwirken mit der ersten, der zweiten bzw. der dritten Kammer (36, 44, 46) der benachbarten Kanallängen; und
einen ersten, einen zweiten und einen dritten Durchgang, die sich von der ersten, der zweiten bzw. der dritten Endöffnung so erstrecken, dass sie an einem mittleren Hohlraum (226) zusammentreffen; **dadurch gekennzeichnet, dass** das Anordnungspassteil weiterhin Folgendes umfasst:
ein Führungsmittel (26), das zur Anordnung zumindest teilweise in dem Hohlraum (226) in einer ersten und einer zweiten Position, um eine zwei Durchgänge verbindende Leitung zu definieren, ausgeführt ist, wobei eine Bewegung zwischen der ersten und der zweiten Position eine Drehung des Führungsmittels (26) erfordert;
wobei die Leitung in der ersten Position den ersten Durchgang mit dem zweiten Durchgang verbindet und in der zweiten Position den ersten Durchgang mit dem dritten Durchgang verbindet.

2. Passteil nach Anspruch 1, wobei das Führungsmittel (26) in der ersten Position eine Sperre bildet, die den ersten Durchgang von dem dritten Durchgang trennt, und in der zweiten Position eine Sperre bildet, die den ersten Durchgang von dem zweiten Durchgang trennt.

3. Passteil nach Anspruch 2, wobei das Führungsmittel (26) sowohl in der ersten als auch in der zweiten Position eine Trennung zwischen der zweiten Kammer (44) und der dritten Kammer (46) aufrechterhält.

4. Passteil nach Anspruch 3, wobei die Abtrennung zwischen der zweiten Endöffnung und der dritten Endöffnung im Wesentlichen durchgehend ist.

5. Passteil nach einem der Ansprüche 1 bis 4, wobei:
die erste Kanallänge ein Innenvolumen aufweist, das in Längsrichtung in die erste Kammer und eine vierte Kammer (34) getrennt ist;
das Passteil weiterhin eine vierte Endöffnung zum Zusammenwirken mit der vierten Kammer (34) und einen sich von der vierten Endöffnung zum Zusammentreffen mit dem mittleren Hohlraum (226) erstreckenden vierten Durchgang umfasst;
das Führungsmittel (26) weiterhin einen Bogenteil (266) umfasst, der eine Überführung und eine Unterführung definiert, wobei die Überführung die Leitung und die Unterführung eine Unterführungleitung umfasst; und
wobei in der ersten Position die Unterführungsleitung den vierten Durchgang mit dem dritten Durchgang verbindet und in der zweiten Position den vierten Durchgang mit dem zweiten Durchgang verbindet.

6. Passteil nach Anspruch 5 zum weiteren Anschließen eines Endes einer dritten Kanallänge (50) mit einem Innenvolumen, das in Längsrichtung in eine fünfte und eine sechste Kammer (54, 56) zur Aufnahme von Kabeln getrennt ist, wobei das Passteil weiterhin Folgendes umfasst:
eine fünfte und eine sechste Endöffnung zum Zusammenwirken mit der fünften bzw. der sechsten Kammer (54, 56); und
einen fünften und einen sechsten Durchgang, die sich von der fünften bzw. der sechsten Endöffnung zum Zusammentreffen mit dem mittleren Hohlraum (226) erstrecken;
wobei das Führungsmittel (26) so angeordnet ist, dass in der ersten Position die Überführungsleitung den fünften Durchgang mit dem zweiten Durchgang verbindet und die Unterführungsleitung getrennt den sechsten Durchgang mit dem dritten Durchgang verbindet, und in der zweiten Position die Überführungsleitung den fünften Durchgang mit dem dritten Durchgang verbindet und die Unterführungsleitung getrennt den sechsten Durchgang mit dem zweiten Durchgang verbindet.

7. Passteil nach Anspruch 6, wobei das Passteil drei Seitenwände (211, 212, 213), die Seiten zwischen den drei Enden des Passteils definieren, und drei Innenwände (214, 215, 216) umfasst, wobei sich eine Innenwand von jedem der drei Enden erstreckt, wobei die Seitenwände und die Innenwände den ersten bis sechsten Durchgang und den Hohlraum (226) definieren.

8. Passteil nach Anspruch 7, wobei die Seitenwände und die Innenwände gleichmäßig gekrümmte Abschnitte aufweisen, wo sie die Richtung ändern.

9. Passteil nach Anspruch 8, wobei die Seitenwände, die Enden des Passteils in einem Winkel miteinander verbinden, zwischen den Enden gleichmäßig gekrümmt sind.

10. Passteil nach Anspruch 7 oder Anspruch 8, wobei sich die Innenwände (214, 215, 216) gleichmäßig zu dem Hohlraum krümmen, wo das Führungsmittel aufgenommen wird, wodurch sie dazu angeordnet sind, Kabel sanft zur Überführungsleitung und/oder zur Unterführungsleitung zu führen.

11. Passteil nach einem der Ansprüche 7 bis 10, wobei die Innenwände (214, 215, 216) im Wesentlichen U-förmig sind, um jedes Ende in drei Durchgänge zu unterteilen.

12. Passteil nach Anspruch 11, wobei das Führungsmittel (26) zwei Seitenwände umfasst, die eine konisch zulaufende Überführungsleitung mit einem breiten offenen Ende und einem schmalen offenen Ende definieren, wobei das breite offene Ende so bemessen ist, dass es zwischen zwei der U-förmigen Innenwände passt, und das schmale offene Ende eine Breite aufweist, die einer gemeinsamen Breite der äußeren Durchgänge entspricht.

13. Passteil nach Anspruch 12, wobei das schmale offene Ende so angeordnet ist, dass es an die Wände anstößt, die die äußeren Durchgänge definieren, wenn es darin aufgenommen ist.

14. Passteil nach Anspruch 12 oder 13, wobei eine der Seitenwände neben dem breiten offenen Ende einen entsprechend geformten Teil einer der benachbarten U-förmigen Innenwände überlappt, und die andere der Seitenwände neben dem breiten offenen Ende sich von der benachbarten U-förmigen Innenwand erstreckt.

15. Passteil nach einem der Ansprüche 7 bis 10, wobei zwei der Innenwände im Wesentlichen U-förmig sind, um zwei Enden in drei Durchgänge zu unterteilen.

16. Passteil nach Anspruch 15, wobei das Führungsmittel (26) im Wesentlichen Y-förmig ist und Seitenwände aufweist, die einen einzelnen Durchtritt in einem Ende definieren, der so bemessen ist, dass er einer gemeinsamen Breite der mittleren Kammer jedes Endes des Passteils entspricht, und die ein Paar Durchtritte am anderen Ende definieren, die so bemessen sind, dass sie einer gemeinsamen Breite der äußeren Kammern jedes Endes entsprechen, und zur Aufnahme in einem Paar solcher äußeren Kammmern angeordnet sind.

17. Passteil nach Anspruch 16, wobei das Paar Durchtritte durch eine U-förmige Seitenwand getrennt ist, die einer der Innenwände entspricht.

18. Passteil nach Anspruch 16 oder 17, wobei das Führungsmittel eine gleichmäßig gekrümmte Rampenfläche umfasst, die die drei Durchtritte verbindet.

19. Passteil nach Anspruch 17 oder 18, wobei in der ersten Position der einzelne Durchtritt in dem ersten und fünften Durchgang mündet und das Paar Durchtritte in dem zweiten und dritten Durchgang aufgenommen wird, so dass die Überführungsleitung den ersten und den fünften Durchgang mit dem zweiten und dem dritten Durchgang verbindet, und wobei die Unterführungsleitung über eine in der das Paar Durchtritte trennenden U-förmigen Wand ausgebildete Öffnung den vierten und den sechsten Durchgang mit dem mittleren Durchgang zwischen dem zweiten und dem dritten Durchgang verbindet.

20. Passteil nach Anspruch 19, wobei die gekrümmten Flächen an dem Führungsmittel (26) zum Führen von Kabeln durch die Öffnung in der das Paar Durchtritte trennenden U-förmigen Wand vorgesehen sind.

21. Passteil nach einem der Ansprüche 16 bis 20, wobei der Hohlraum (226) mit einer niedrigen Wand versehen ist, die sich zwischen zwei der U-förmigen Innenwände erstreckt, um den ersten und den fünften Durchgang teilweise von dem vierten und dem sechsten Durchgang zu trennen, wobei sich die niedrige Wand so erstreckt, dass sie auf die Unterseite des Bogenteils des Führungsmittels trifft, wenn es an dem Basisteil befestigt ist.

22. Passteil nach Anspruch 21, wobei das Führungsmittel (26) angelenkte Teile aufweist, die sich von den Seitenwänden des Führungsmittels so erstrecken, dass sie auf zwei der U-förmigen Innenwände treffen und an die Oberseite der niedrigen Wand anstoßen.

23. Passteil nach Anspruch 22, wobei die Seitenwände mit Befestigungsmitteln zum Befestigen der angelenkten Teile an den Seitenwänden versehen sind.

24. Passteil nach einem der Ansprüche 16 bis 23, wobei in der zweiten Position das Paar Durchtritte in dem ersten und dem fünften Durchgang münden und sich der einzelne Durchtritt in das Ende des Passteils mit der zweiten und der dritten Kammer erstreckt, so dass die den einzelnen Durchtritt definierenden Seitenwände Innenwände bilden, die die zweite und die dritte Kammer bilden, so dass die Überführungsleitung den ersten und den fünften Durchgang mit dem mittleren Durchgang zwischen dem zweiten und dem dritten Durchgang verbindet und die Unterführungsleitung den vierten und den sechsten Durchgang mit dem zweiten und dem dritten Durchgang verbindet.

25. Kabelkanalanordnung (10), die eine erste und eine zweite Kanallänge (30, 40) und das Passteil (20) nach einem der vorhergehenden Ansprüche umfasst, das die erste und die zweiten Kanallänge verbindet, wobei:
die erste Kanallänge (30) eine erste Kammer (36) zur Aufnahme von Kabeln aufweist, die an einem am Passteil an einem ersten Durchbruch angrenzenden Ende abschließt;
die zweite Kanallänge (40) ein Innenvolumen aufweist, das in Längsrichtung in eine zweite und eine dritte Kammer (44, 46) zur Aufnahme von Kabeln unterteilt ist, wobei die zweite und die dritte Kammer an einem am Passteil an einem zweiten und einem dritten Durchbruch angrenzenden Ende abschließt, und
die erste, die zweite und die dritte Endöffnung des Passteils an dem ersten, dem zweiten bzw. dem dritten Durchbruch der ersten und der zweiten Kanallänge angrenzen, so dass die erste, die zweite und die dritte Kammer mit dem ersten, dem zweiten und dem dritten Durchgang fortlaufend sind.

26. Kabelkanalanordnung (10) nach Anspruch 25, wobei die erste Kanallänge ein Innenvolumen aufweist, das in Längsrichtung in eine erste Kammer (36) und eine vierte Kammer (34) unterteilt ist; wobei das Passteil weiterhin eine vierte Endöffnung zum Zusammenwirken mit dem vierten Durchbruch umfasst, so dass die vierte Kammer (34) mit einem sich von der vierten Endöffnung erstreckenden vierten Durchgang fortlaufend ist, um mit den mittleren Hohlraum zusammenzutreffen; das Führungsmittel (26) weiterhin einen Bogenteil umfasst, der eine Überführung und eine Unterführung definiert, wobei die Überführung die Leitung und die Unterführung eine Unterführungsleitung umfasst; und wobei in der ersten Position die Unterführungsleitung den vierten Durchgang mit dem dritten Durchgang verbindet und in der zweiten Position den vierten Durchgang mit dem zweiten Durchgang verbindet.

27. Kabelkanalanordnung (10) nach Anspruch 26, die weiterhin eine dritte Kanallänge (50) umfasst, die über das Passteil mit der ersten und der zweiten Kanallänge verbunden ist, wobei die dritte Kanallänge (50) ein Innenvolumen aufweist, das in Längsrichtung in eine fünfte und eine sechste Kammer zur Aufnahme von Kabeln unterteilt ist, wobei die fünfte und die sechste Kammer (54, 56) an einem am Passteil am fünften und am sechsten Durchbruch angrenzenden Ende abschließen,
wobei das Passteil weiterhin Folgendes umfasst:
eine fünfte und eine sechste Endöffnung zum Zusammenwirken mit dem fünften bzw. dem sechsten Durchtritt; und
einen fünften und einen sechsten Durchgang, die sich von der fünften bzw. der sechsten Endöffnung erstrecken, so dass sie mit der fünften und der sechsten Kammer fortlaufend sind und sich zum Zusammentreffen mit dem mittleren Hohlraum erstrecken;
wobei das Führungsmittel (26) so angeordnet ist, dass in der ersten Position die Überführungsleitung den fünften Durchgang mit dem zweiten Durchgang verbindet und die Unterführungsleitung getrennt den sechsten Durchgang mit dem dritten Durchgang verbindet und in der zweiten Position die Überführungsleitung den fünften Durchgang mit dem dritten Durchgang und die Unterführungsleitung getrennt den sechsten Durchgang mit dem zweiten Durchgang verbindet.

## Revendications

1. Raccord (20) pour ensemble de chemins de câbles permettant de joindre une extrémité d'un premier tronçon de chemin (30) à une extrémité d'un deuxième tronçon de chemin (40), le premier tronçon de chemin (30) comportant un premier compartiment (36) destiné à porter des câbles et le deuxième tronçon de chemin (40) présentant un volume interne séparé dans le sens de la longueur en des deuxième et troisième compartiments (44, 46) destinés à porter des câbles,
le raccord (20) comprenant :
des première, deuxième et troisième ouvertures d'extrémité destinées à s'associer respectivement aux premier, deuxième et troisième compartiments (36, 44, 46) des tronçons de chemin adjacents ; et
des premier, deuxième et troisième passages s'étendant respectivement des première, deuxième et troisième ouvertures d'extrémité pour se rejoindre au niveau d'un espace central (226) ;
le raccord étant **caractérisé en ce qu'**il comprend en outre :
des moyens de guidage (26) conçus pour être placés au moins partiellement dans l'espace (226) dans des première et deuxième positions afin de définir un conduit reliant deux passages, le mouvement entre les première et deuxième positions nécessitant une rotation des moyens de guidage (26) ;
dans la première position, le conduit reliant le premier passage au deuxième passage, et, dans la deuxième position, le conduit reliant le premier passage au troisième passage.

2. Raccord selon la revendication 1, dans la première position, les moyens de guidage (26) formant une barrière séparant le premier passage du troisième passage et, dans la deuxième position, les moyens de guidage (26) formant une barrière séparant le premier passage du deuxième passage.

3. Raccord selon la revendication 2, les moyens de guidage (26) maintenant une séparation entre le deuxième compartiment (44) et le troisième compartiment (46) à la fois dans les première et deuxième positions.

4. Raccord selon la revendication 3, la séparation étant sensiblement continue entre la deuxième ouverture d'extrémité et la troisième ouverture d'extrémité.

5. Raccord selon l'une quelconque des revendications 1 à 4 :
le premier tronçon de chemin présentant un volume interne séparé dans le sens de la longueur en le premier compartiment et un quatrième compartiment (34) ;
le raccord comprenant en outre une quatrième ouverture d'extrémité destinée à s'associer au quatrième compartiment (34) et un quatrième passage s'étendant de la quatrième ouverture d'extrémité pour rejoindre l'espace central (226) ;
les moyens de guidage (26) comprenant en outre une partie d'arcade (266) définissant un passage de dessus et un passage de dessous, le passage de dessus comprenant le conduit et le passage de dessous comprenant un conduit de passage de dessous ; et
dans la première position, le conduit de passage de dessous reliant le quatrième passage au troisième passage et, dans la deuxième position, le conduit de passage de dessous reliant le quatrième passage au deuxième passage.

6. Raccord selon la revendication 5 permettant en outre de joindre une extrémité d'un troisième tronçon de chemin (50) présentant un volume interne séparé dans le sens de la longueur en des cinquième et sixième compartiments (54, 56) destinés à porter des câbles,
le raccord comprenant en outre :
des cinquième et sixième ouvertures d'extrémité destinés à s'associer respectivement aux cinquième et sixième compartiments (54, 56) ; et
des cinquième et sixième passages s'étendant respectivement des cinquième et sixième ouvertures d'extrémité pour rejoindre l'espace central (226) ;
les moyens de guidage (26) étant agencés de manière à ce que, dans la première position, le conduit de passage de dessus relie le cinquième passage au deuxième passage et le conduit de passage de dessous relie séparément le sixième passage au troisième passage et à ce que, dans la deuxième position, le conduit de passage de dessus relie le cinquième passage au troisième passage et le conduit de passage de dessous relie séparément le sixième passage au deuxième passage.

7. Raccord selon la revendication 6, comprenant trois parois latérales (211, 212, 213) définissant des côtés entre les trois extrémités du raccord et trois parois internes (214, 215, 216), une paroi interne s'étendant de chacune des trois extrémités, les parois latérales et les parois internes définissant les premier à sixième passages et l'espace (226).

8. Raccord selon la revendication 7, les parois latérales et les parois internes présentant des segments à courbure régulière où elles changent de direction.

9. Raccord selon la revendication 8, les parois latérales joignant des extrémités du raccord en formant un angle présentant une courbure régulière entre les extrémités.

10. Raccord selon la revendication 7 ou la revendication 8, les parois internes (214, 215, 216) présentant une courbure régulière en direction de l'espace où se logent les moyens de guidage, en étant ainsi agencées pour guider des câbles de façon régulière jusqu'au conduit de passage de dessus et/ou au conduit de passage de dessous.

11. Raccord selon l'une quelconque des revendications 7 à 10, les parois internes (214, 215, 216) étant sensiblement en forme de U pour diviser chaque extrémité en trois passages.

12. Raccord selon la revendication 11, les moyens de guidage (26) comprenant deux parois latérales définissant un conduit de passage de dessus se rétrécissant doté d'une large extrémité ouverte et d'une extrémité ouverte étroite, la large extrémité ouverte étant dimensionnée de manière à s'ajuster entre deux des parois internes en forme de U et l'extrémité ouverte étroite présentant une largeur correspondant à une largeur commune des passages extérieurs.

13. Raccord selon la revendication 12, l'extrémité ouverte étroite étant agencée pour venir en butée sur les parois définissant les passages extérieurs une fois logée dans celles-ci.

14. Raccord selon la revendication 12 ou la revendication 13, une des parois latérales adjacentes à la large extrémité ouverte chevauchant une partie de forme correspondante d'une des parois internes adjacentes en forme de U, et l'autre des parois latérales adjacentes à la large extrémité ouverte s'étendant de la paroi interne adjacente en forme de U.

15. Raccord selon l'une quelconque des revendications 7 à 10, deux des parois internes étant sensiblement en forme de U pour diviser deux extrémités en trois passages.

16. Raccord selon la revendication 15, les moyens de guidage (26) étant sensiblement en forme de Y, possédant des parois latérales qui définissent un trou unique à une extrémité qui est dimensionné de manière à correspondre à une largeur commune du compartiment central de chaque extrémité du raccord, et qui définissent une paire de trous à l'autre extrémité dimensionnés de manière à correspondre à une largeur commune des compartiments extérieurs de chaque extrémité et disposés pour se loger dans une paire de tels compartiments extérieurs.

17. Raccord selon la revendication 16, la paire de trous étant séparés par une paroi latérale en forme de U correspondant à une des parois internes.

18. Raccord selon la revendication 16 ou la revendication 17, les moyens de guidage comprenant une surface en rampe à courbure régulière reliant les trois trous.

19. Raccord selon la revendication 17 ou la revendication 18, dans la première position, le trou unique débouchant sur les premier et cinquième passages, et la paire de trous se logeant dans les deuxième et troisième passages de manière à ce que le conduit de passage de dessus joigne les premier et cinquième passages aux deuxième et troisième passages ; et le conduit de passage de dessous reliant les quatrième et sixième passages au passage central entre les deuxième et troisième passages via une ouverture ménagée dans la paroi en forme de U séparant la paire de trous.

20. Raccord selon la revendication 19, des surfaces incurvées étant formées sur les moyens de guidage (26) pour guider des câbles à travers l'ouverture dans la paroi en forme de U séparant la paire de trous.

21. Raccord selon l'une quelconque des revendications 16 à 20, l'espace (226) étant doté d'une paroi basse s'étendant entre deux des parois internes en forme de U pour diviser partiellement les premier et cinquième passages des quatrième et sixième passages, la paroi basse s'étendant de manière à rejoindre le dessous de la partie d'arcade des moyens de guidage une fois fixés sur la pièce de base.

22. Raccord selon la revendication 21, les moyens de guidage (26) comportant des parties articulées qui s'étendent de parois latérales de celui-ci pour rejoindre deux des parois internes en forme de U et pour venir en butée sur le haut de la paroi basse.

23. Raccord selon la revendication 22, les parois latérales étant dotées de moyens d'attache destinés à attacher les parties articulées aux parois latérales.

24. Raccord selon l'une quelconque des revendications 16 à 23, dans la deuxième position, la paire de trous débouchant sur les premier et cinquième passages, et le trou unique s'étendant dans l'extrémité du raccord comprenant les deuxième et troisième compartiments de manière à ce que les parois latérales définissant l'ouverture unique forment des parois internes définissant les deuxième et troisième compartiments, de manière à ce que le conduit de passage de dessus joigne les premier et cinquième passages au passage central entre les deuxième et troisième passages, et à ce que le conduit de passage de dessous relie les quatrième et sixième passages aux deuxième et troisième passages.

25. Ensemble (10) de chemins de câbles comprenant des premier et deuxième tronçons de chemin (30, 40) et le raccord (20) selon l'une quelconque des revendications précédentes qui joint les premier et deuxième tronçons de chemin :
le premier tronçon de chemin (30) comprenant un premier compartiment (36) destiné à porter des câbles qui s'interrompt à une extrémité contiguë au raccord au niveau d'un premier orifice ;
le deuxième tronçon de chemin (40) comprenant un volume interne séparé dans le sens de la longueur en des deuxième et troisième compartiments (44, 46) destinés à porter des câbles, les deuxième et troisième compartiments s'interrompant à une extrémité contiguë au raccord au niveau de deuxième et troisième orifices ; et
les premier, deuxième et troisième ouvertures d'extrémité du raccord étant respectivement contiguës aux premier, deuxième et troisième orifices des premier et deuxième tronçons de chemin de manière à ce que les premier, deuxième et troisième compartiments soient en continuité des premier, deuxième et troisième passages.

26. Ensemble (10) de chemins de câbles selon la revendication 25, le premier tronçon de chemin présentant un volume interne séparé dans le sens de la longueur en le premier compartiment (36) et un quatrième compartiment (34) ; le raccord comprenant en outre une quatrième ouverture d'extrémité destinée à s'associer au quatrième orifice de manière à ce que le quatrième compartiment (34) soit en continuité d'un quatrième passage s'étendant de la quatrième ouverture d'extrémité pour rejoindre l'espace central ; les moyens de guidage (26) comprenant en outre une partie d'arcade définissant un passage de dessus et un passage de dessous, le passage de dessus comprenant le conduit et le passage de dessous comprenant un conduit de passage de dessous ; et, dans la première position, le conduit de passage de dessous reliant le quatrième passage au troisième passage et, dans la deuxième position, le conduit de passage de dessous reliant le quatrième passage au deuxième passage.

27. Ensemble (10) de chemins de câbles selon la revendication 26, comprenant en outre un troisième tronçon de chemin (50) joint aux premier et deuxième tronçons de chemin par le raccord, le troisième tronçon de chemin (50) présentant un volume interne séparé dans le sens de la longueur en des cinquième et sixième compartiments destinés à porter des câbles, les cinquième et sixième compartiments (54, 56) s'interrompant au niveau d'une extrémité contiguë au raccord au niveau de cinquième et sixième orifices ;
le raccord comprenant en outre :
des cinquième et sixième ouvertures d'extrémité destinés à s'associer respectivement aux cinquième et sixième orifices ; et
des cinquième et sixième passages s'étendant respectivement des cinquième et sixième ouvertures d'extrémité pour être en continuité des cinquième et sixième compartiments et s'étendant pour rejoindre l'espace central ;
les moyens de guidage (26) étant agencés de manière à ce que, dans la première position, le conduit de passage de dessus relie le cinquième passage au deuxième passage et le conduit de passage de dessous relie séparément le sixième passage au troisième passage et à ce que, dans la deuxième position, le conduit de passage de dessus relie le cinquième passage au troisième passage et le conduit de passage de dessous relie séparément le sixième passage au deuxième passage.
